# EUROPÄISCHE PATENTANMELDUNG

(11) **EP 1 321 566 A1**
(43) Veröffentlichungstag der Anmeldung: **25.06.2003**
(21) Anmeldenummer: 02027135.9
(22) Anmeldetag: 04.12.2002
(51) Int. Cl.: D06F 58/28, D06F 39/00, G01N 22/04

(54) **Wäschepflegeeinrichtung mit Feuchtsensor und Verfahren zur Bestimmung des Feuchtgehalts von Wäsche**

(30) Priorität: 21.12.2001 DE 10163198
(71) Anmelder: BSH Bosch und Siemens Hausgeräte GmbH, 81669 München (DE)
(72) Erfinder: Fochem, Manfred, 10629 Berlin (DE); Heide, Patric, Dr., 85579 Neubiberg (DE); Lahrmann, Andreas, Dr., 14193 Berlin (DE); Nitschmann, Kai, 13187 Berlin (DE); Vossiek, Martin, Dr., 31139 Hildesheim (DE); Wagner, Martin, 81377 München (DE)

(57) **Zusammenfassung**

Zur Bestimmung der Wäschefeuchte in einer Wäschepflegeeinrichtung wird vorgeschlagen, die Wäschetrommel als Hohlraumresonator zu nutzen, mit einer Sonde ein Feld einzukoppeln und in einer Meßschaltung samt Auswerteeinrichtung zumindest eine Schwingungsmode des Hohlraumresonators zu erfassen und einem Feuchtegehalt in der Wäschetrommel zuzuordnen.

## Beschreibung

Die Erfindung betrifft eine Wäschepflegeeinrichtung nach dem Oberbegriff von Anspruch 1. Unter Wäschepflegeeinrichtungen werden dabei insbesondere Wäschetrockner, Waschmaschinen, kombinierte Geräte oder auch andere Pflegeeinrichtungen verstanden.

Unter Wäsche ist im Sinne der Erfindung jede Art von Textilien oder Geweben zu verstehen. Gängige Wäschetrockenverfahren arbeiten nach dem Kondensatorprinzip, bei der die in der Wäsche enthaltene Feuchtigkeit durch Wärmezufuhr in die Gasphase überführt und an einem Kondensator als Flüssigkeit wieder auskondensiert wird, bis der Wäsche die Feuchtigkeit in einem gewünschten Maße bzw. bis zu einer gewünschten Trockenstufe entzogen ist. Diesen und auch anderen bekannten Verfahren ist der relativ hohe Energieverbrauch gemein, der zur Überführung der Gesamtfeuchtigkeit in die Gasphase erforderlich ist und der nur teilweise durch Wärmetauschen zurückgewonnen werden kann. Darüber hinaus stellen bekannte Wäschetrockenverfahren eine mechanische und thermische Belastung der Wäsche dar. Moderne Wäschetrockner besitzen daher Einrichtungen, die diese Belastungen der Wäsche sowie den Energieverbrauch minimieren.

Eine Möglichkeit, den Verfahrensfortschritt beim Wäschetrocknen zu kontrollieren, besteht darin, den Feuchtegehalt der Wäsche zu messen und das Meßergebnis entweder zur Anzeige zu bringen oder mit dem Meßergebnis das weitere Verfahren zu steuern und ggf. das Trockenverfahren automatisch zu beenden.

Für die Messung des Feuchtigkeitsgehalts in einem Material sind verschiedene akustische, optische und elektrische Verfahren geeignet. Die Anwendung akustischer Verfahren zur Feuchtemessung von Wäsche haben den Nachteil, daß die akustische Einkopplung der Wellen in die Wäsche sehr schwierig ist. Außerdem weist Wäsche eine hohe Dämpfung akustischer Wellen auf, was eine Messung stark behindert. Optische Verfahren wie Infrarot-Reflexions- und Absorptionsverfahren hingegen können leicht durch Verschmutzung gestört werden. Außerdem sind die Sensoren selbst gegen Feuchte und Wasserdampf empfindlich und zeigen zumeist ein stark temperaturabhängiges Verhalten.

Elektrische Verfahren zur Feuchtebestimmung lassen sich in zwei Untergruppen aufteilen. Zum einen sind dies Verfahren, die den elektrischen Leitwert in Form von Leitfähigkeitsmessungen bestimmen und zumeist unterhalb einer Arbeitsfrequenz von 10 MHz arbeiten. Zum anderen sind dies Meßverfahren, mit denen der komplexe Leitwert bestimmt wird und die eine Arbeitsfrequenz von zumeist oberhalb 100 MHz aufweisen. Die unterschiedlichen Meßfrequenzen ergeben sich dadurch, daß oberhalb einiger 10 MHz der Einfluß der Leitfähigkeit abnimmt und im Gegenzug der Einfluß der dielektrischen Effekte dominierend wird.

Leitfähigkeitsmessungen haben den Nachteil, daß der Leitwert von Wasser durch in Wasser gelöste Substanzen bestimmt wird und daher starken örtlichen und zeitlichen Schwankungen unterworfen ist. Vorteilhaft ist dagegen die Bestimmung der Dielektrizitätskonstante, deren Höhe vornehmlich durch die Menge der Wassermoleküle in der Wäsche bestimmt ist und daher direkt der interessierenden Größe zugeordnet werden kann.

Zur Messung des Feuchtegehalts von Schüttgütern wie Getreide und Beton, von Mauerwerk, Papier und dünnen Materialien sind Mikrowellensensoren bekannt bzw. werden Verfahren angewendet, die mit Mikrowellen arbeiten. Mikrowellensensoren sind beispielsweise aus US 4,991,915, US 4,674,325, US 4,620,146, US 4,484,133 oder EP-A 0 468 023 bekannt. Bei den bekannten Verfahren und Anordnungen handelt es sich um spezielle Ausführungen und Verfahren, die für den Einsatz in Wäschetrocknern nicht vorgesehen und oder nicht geeignet sind. In Verbindung mit Wäschepflegeeinrichtungen werden Mikrowellen bislang nur zum Zweck der Wäschetrockung verwendet, beispielsweise in einem aus der US-A 4 765 066 bekannten Verfahren.

Aufgabe der vorliegenden Erfindung ist es, eine Wäschepflegeeinrichtung mit einem Feuchtesensor und ein Verfahren anzugeben, mit denen eine sichere und genaue Bestimmung der Wäschefeuchte möglich ist.

Die Aufgabe wird erfindungsgemäß durch eine Wäschepflegeeinrichtung mit den Merkmalen von Anspruch 1 gelöst. Vorteilhafte Ausgestaltungen der Erfindung sowie ein Verfahren zur Bestimmung des Feuchtigkeitsgehalt in Wäsche sind weiteren Ansprüchen zu entnehmen.

Die Erfindung beruht auf der Idee, die Waschtrommel samt darin befindlicher feuchter Wäsche als Hohlraumresonator zu nutzen und zumindest eine der sich im Hohlraum einstellenden Schwingungsmoden zu erfassen. Die Schwingungsmoden können dann in einer Auswerteeinheit der Feuchte zugeordnet werden. Dazu weist die Wäschepflegeeinrichtung einen Feuchtesensor auf, dessen wesentlicher Bestandteil eine im Innenraum der Wäschepflegeeinrichtung angeordnete Sonde ist. An die Sonde ist eine Meßschaltung angeschlossen, die zur Erfassung der Schwingungsmoden des Hohlraumresonators dient. Die Werte werden an eine Auswerteeinrichtung überführt und in einem Auswerteverfahren der Feuchtegehalt in der Wäschetrommel bestimmt.

Damit die Wäschetrommel bei der Wäschepflegeeinrichtung als Hohlleiter fungieren kann, muß sie aus einem leitenden Material wie beispielsweise Metallblech gefertigt und zudem von einer Tür aus leitendem Material verschlossen sein. Die beiden Enden des Hohlleiters sind mit Kurzschlüssen versehen. Eine solche Anordnung bezeichnet man im Mikrowellenbereich als Hohlraumresonator, genauer gesagt als zylindrischen Hohlraumresonator, da die Geometrie der Wäschetrommel entsprechend ihrer Funktion üblicherweise rotationssymmetrisch ist.

In einem Hohlraumresonator und damit auch innerhalb der entsprechend ausgebildeten Wäschetrommel können sich nach bestimmten Gesetzmäßigkeiten verschiedene Resonanzmoden ausbilden. Man unterscheidet elektrische Moden und magnetische Moden verschiedener Ordnungen. Eine leere bzw. mit atmosphärischer Luft gefüllte Wäschetrommel weist im Inneren ein verlustfreies Medium auf, so daß sich die Resonanzfrequenzen innerhalb des von der Wäschetrommel gebildeten Hohlraums ausschließlich von deren geometrischen Abmessungen ableiten. Weist das Füllmedium in der Wäschetrommel ein Dielektrikum auf, so bewirkt dies neben der Änderung der Schwinggüte auch eine Verschiebung der Resonanzfrequenz. Ist die Wäschetrommel nur teilweise gefüllt, so hat dieser Befüllungsgrad ebenfalls einen direkten Einfluß auf die Resonanzcharakteristiken. Bei Frequenzen oberhalb einiger 10 MHz ist die Dielektrizitätszahl des Füllmediums in der Wäschetrommel die entscheidende Größe für die Beeinflussung dieses Resonators. Die Dielektrizitätszahl εᵣ ist im allgemeinen eine komplexe Form der Größe εᵣ = εᵣ'- j x εᵣ", die für jedes Material charakteristisch ist und außerdem von Temperatur und Frequenz abhängt. Die Größe εᵣ' ist ein Maß für die Phase, bestimmt also die elektrische Länge. εᵣ" ist ein Maß für die Verluste im Material. Sowohl εᵣ' also εᵣ" beeinflussen folglich die Resonanzeigenschaften des Hohlraumresonators bzw. die Resonanzeigenschaften im Inneren der als Hohlraumresonator benutzten Wäschetrommel.

Der Betrag der Dielektrizitätszahl von trockener Wäsche bzw. Kleidung liegt in der Größenordnung von 2 - 5. Da Wasser eine deutlich größere Dielektrizitätszahl hat, die im Bereich von ca. 80 liegt, wird die Dielektrizitätszahl von feuchter Wäsche maßgeblich durch den Wasseranteil in der Wäsche beeinflußt. In der als Hohlraum fungierenden Wäschetrommel mit dem Luft/Wäsche/Wassergemisch als Füllmedium werden somit auch die Resonanzmoden des Resonators signifikant vom Feuchtigkeitsgehalt in der Wäsche bestimmt.

Zur Charakterisierung der resonanten Schwingungsmoden können die Resonanzfrequenz und die Resonanzgüte herangezogen werden. Erfindungsgemäß ist dementsprechend die Meßschaltung zur Bestimmung der Resonanzfrequenz und/oder der Güte des Hohlraumresonator ausgebildet.

In einer Ausführungsform der Erfindung ist die Meßschaltung als Reflektorschaltung ausgebildet. Dazu ist die Sonde über eine Sende/Empfangsweiche mit einem abstimmbaren Mikrowellengenerator und einem Detektor zur frequenzabhängigen Messung der an der Sonde reflektierten Welle ausgebildet. Als eigentliche Meßgröße wird hierbei die Impedanz der Hohlraumresonatoranordnung erfaßt. Diese basiert auf dem Reflexionsfaktor, der frequenzabhäng ist und bei der Resonanzfrequenz ein Maximum aufweist. In Streuparametern wird mit der Reflexion eigentlich die Größe S₁₁ gemessen. Diese Größe läßt sich auch über die Höhe der maximalen Amplitude auswerten, wobei die maximale Amplitude mit zunehmender Wäschefeuchte abnimmt.

In einer weiteren Ausführung der Erfindung ist die Sonde mit einem Rückkoppelnetzwerk verbunden und bildet zusammen mit diesem und dem Hohlraumresonator einen Oszillator. Die dazugehörige Meßschaltung ist zur Bestimmung der Resonanzfrequenz des Oszillators ausgebildet.

Eine weitere Auswertemöglichkeit bei der erfindungsgemäßen Einrichtung besteht darin, die Phasenbeziehung zwischen einem an der Sonde reflektierten Signal und dem an die Sonde angelegten generierten Signal zu bestimmen. Wird das angelegte Signal über einen Frequenzbereich variiert, so zeigt die Phasenbeziehung an der Position der Resonanzfrequenz einen signifikanten Phasenübergang. Dieser verläuft um so steiler, je höher die Güte des Resonators ist. Der über die Frequenz gemessene Verlauf der Phasenbeziehung zwischen angelegtem und reflektiertem Signal kann daher sowohl über den Wendepunkt der Kurve als auch über die Geschwindigkeit des Phasenumschlags ausgewertet werden. Die Position des Phasenübergangs ergibt die Resonanzfrequenz, die Geschwindigkeit des Phasenumschlags die Güte des Hohlraumresonators. In einer einfachen Anordnung zur Bestimmung der Phasenbeziehung wird ein Mischer vorgesehen, der die Frequenz des an der Sonde eingekoppelten Signals mit dem am Detektor reflektierten Signal mischt. Aus dem sich ergebenden Differenzsignal (Mischsignal) wird in Auswerteeinheit und Meßschaltung die Phasenbeziehung bestimmt.

Eine einfache Möglichkeit der Bestimmung der Resonanzfrequenz eines als Oszillator ausgebildeten Feuchtesensors kann mit einem Frequenzteiler und einem Zähler verwirklicht werden. Der Frequenzteiler teilt das Taktsignal, das vom Oszillator geliefert wird, auf eine niedrige zählbare Frequenz herunter, die von dem Zähler bestimmt werden, wobei die pro Zeiteinheit gemessenen Impulse der ursprünglichen Frequenz zugewiesen werden können.

Im folgenden wird das erfindungsgemäße Verfahren anhand von Ausführungsbeispielen und der dazugehörigen acht Figuren näher erläutert.
Figur 1 zeigt schematisch eine Anordnung zur Reflexionsmessung
Figur 2 zeigt die Amplitude des reflektierten Signals, aufgetragen gegen die eingekoppelte Frequenz bei unterschiedlichen Feuchtegehalten
Figur 3 zeigt die Phasenbeziehung zwischen eingekoppeltem und reflektiertem Signal, aufgetragen gegen die Frequenz bei unterschiedlichen Wäschefeuchten
Figur 4 zeigt die Abhängigkeit der maximalen Amplitude des reflektierten Signals von der Wäschefeuchte
Figur 5 zeigt die Abhängigkeit der Resonatorgüte von der Wäschefeuchte
Figur 6 zeigt die Abhängigkeit der Resonanzfrequenz von der Wäschefeuchte
Figur 7 zeigt eine Ausführung der Meßanordnung als Oszillatorschaltung in schematischer Darstellung
Figur 8 zeigt zwei Resonanzspektren bei unterschiedlichen Feuchtegehalten.

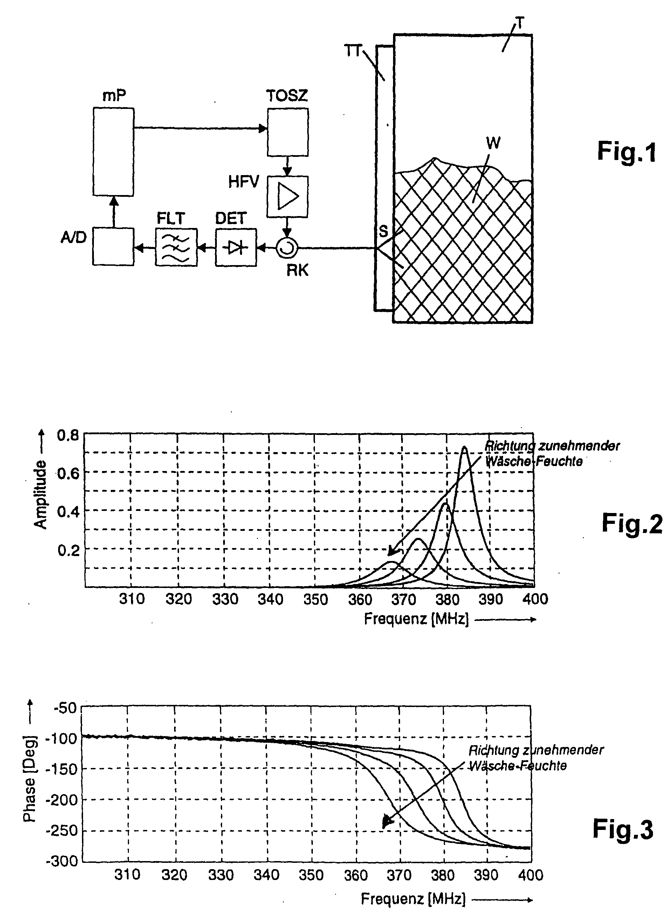

Figur 1 zeigt eine einfache Möglichkeit, den Feuchtegehalt einer in einer Wäschetrommel T angeordneten Wäsche mittels einer Reflektorschaltung zu ermitteln. Dazu wird im unteren Bereich der Wäschetrommel T eine Sonde S angeordnet, vorzugsweise an der Tür oder an einem nicht bewegten Teil wie dem Lagerschild. Damit Sonde S und Innenraum der Trommel T einen Hohlraumresonator bilden können, ist der gesamte Innenraum der Trommel inklusive dem nach innen weisenden Teil der Tür aus leitendem Material. Die Sonde S selbst ist so ausgestaltet, daß sie im interessierenden und zu untersuchenden Frequenzband weitgehend konstante Übertragungseigenschaften aufweist und insbesondere keine eigenen Resonanzstellen besitzt. D.h. daß die Sonde S für sich betrachtet nicht als Antenne oder Resonator ausgebildet ist.

Das Eingangssignal wird z.B. in einem mit einem Prozessor mP gesteuerten Mikrowellenoszillator TOSZ erzeugt, in einem Hochfrequenzverstärker HFV und über eine z. B. als Richtkoppler RK ausgebildete Sende/Empfangsweiche zur Sonde S geleitet. Der Richtkoppler RK verhindert dabei, daß von der Sonde S reflektierte Signale in den Verstärker zurückgekoppelt werden und diesen beschädigen. Ebenso verhindert der Richtkoppler eine direkte Übertragung vom Mikrowellenoszillator TOSZ auf den Detektor DET. Dieser empfängt ausschließlich das von der Sonde reflektierte Signal, welches über einen beispielsweise als Lowpassfilter ausgelegten Filter FLT das Meßsignal ergibt, beispielsweise eine Meßspannung. In einem Analog/Digitalwandler A/D wird aus der Meßspannung ein Meßwert generiert und im Prozessor mP als Auswerteeinheit einer Dielektrizitätszahl bzw. einer daraus abgeleiteten Wäschefeuchte zugeordnet. Während des Verfahrens wird die Oszillatorfrequenz kontinuierlich über den gewünschten Frequenzbereich variiert, wobei in dem Meßbereich eine oder mehrere resonante Moden angesiedelt sein können.

In Figur 2 ist die Amplitude des Meßsignals über die angelegte Oszillatorfrequenz aufgetragen. Die unterschiedlichen Kurven entsprechen unterschiedlichen Feuchtegehalten und weisen unterschiedliche Maxima auf. Mit zunehmendem Feuchtegehalt der Wäsche sinkt z.B. die Resonanzfrequenz des Hohlraumresonators, ebenso vermindert sich in dieser Richtung die Amplitude des Meßsignals am Maximum.

Figur 3 zeigt die Phasenbeziehung zwischen dem an die Sonde S angelegten Oszillatorsignal und dem von der Sonde S reflektierten Signalpunkt bei der Variation der Oszillatorfrequenz. Die unterschiedlichen Kurven entsprechen unterschiedlichen Feuchtegehalten der Wäsche. Dieser Phasenverlauf kann nach dem Wendepunkt der Meßkurve ausgewertet werden, der dem Phasenübergang entspricht, der bei der Resonanzfrequenz auftritt. Es zeigt sich, daß dieser Phasenübergang mit abnehmender Wäschefeuchtigkeit bei höheren Frequenzen auftritt. Ebenso zeigt sich, daß der Phasenübergang mit abnehmendem Feuchtegehalt abrupter erfolgt, die Meßkurve im Wendepunkt also steiler ausfällt. Die Steilheit der Meßkurve am Phasenübergang ist auch ein Maß für die Güte des Hohlraumresonators. Für diese Messung ist der Detektor als Mischer auszulegen, der das gesendete (am Oszillator erzeugte) mit dem empfangenen (an der Sonde reflektierten) Signal frequenzmischt, um so deren Phasenbeziehung zu bestimmen. Die Meßgrößen sind in diesem Fall Real- und Imaginärteil des niederfrequenten Mischsignals.

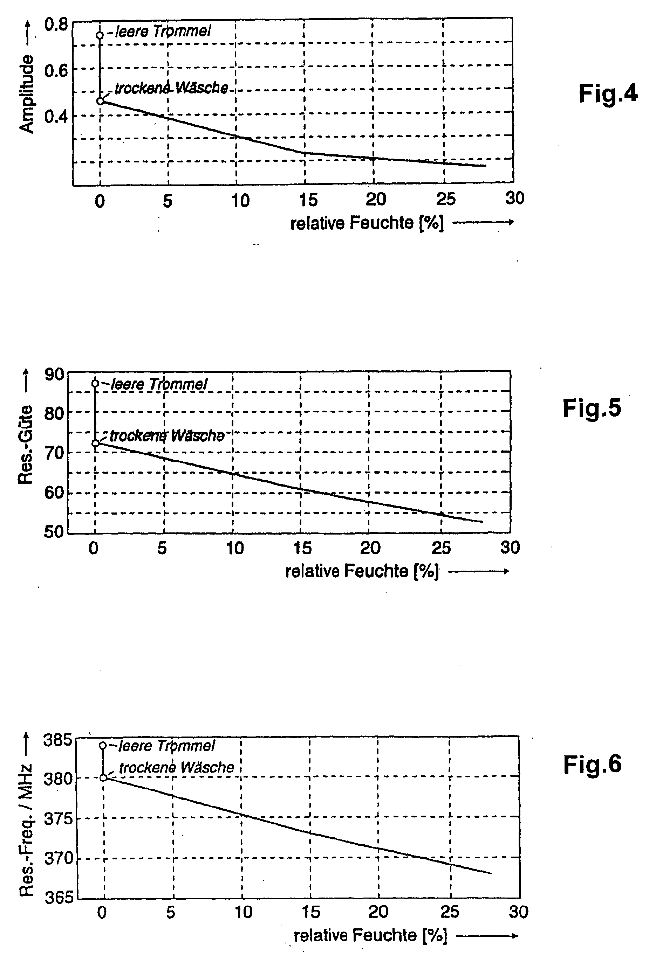

Wird diese Messung bei einem Wäschetrockenvorgang zu unterschiedlichen Zeitpunkten mit jeweils unterschiedlichem Feuchtegehalt der Wäsche durchgeführt, so ergibt sich für die Abhängigkeit der Amplitude des Meßsignals vom Feuchtegehalt der Wäsche die in Figur 4 dargestellte Kurve. Ein weiterer auf der X-Achse beim Wert Null liegender Meßpunkt LT betrifft die bei leerer Trommel bestimmte Amplitude des Meßsignals, die sich von der Amplitude unterscheidet, die einer mit trockener Wäsche befüllten Wäschetrommel zugeordnet ist. Der Unterschied dieser beiden Werte ist auf den Unterschied im dielektrischen Verhalten von Luft und trockener Wäsche zurückzuführen.

Figur 5 zeigt die beispielsweise aus der Phasenbeziehung bestimmte Resonatorgüte in Abhängigkeit von dem Feuchtegehalt in der Trommel bzw. in der Wäsche.

Figur 6 zeigt den Verlauf der Resonanzfrequenz in Abhängigkeit von dem Feuchtegehalt der Wäsche und gibt ebenso wie Figur 4 und 5 noch einen Wert LT für eine leere Wäschetrommel an. Die Meßkurven der Figuren 4 - 6 sind an einer dominanten Schwingungsmode des Hohlraumresonators bestimmt, wofür hier die sogenannte elektrische E₀₁₀-Mode verwendet werden kann und wird, auch TM₀₁₀-Mode genannt, die generell bei kurzen zylindrischen Hohlraumresonatoren dominant ist.

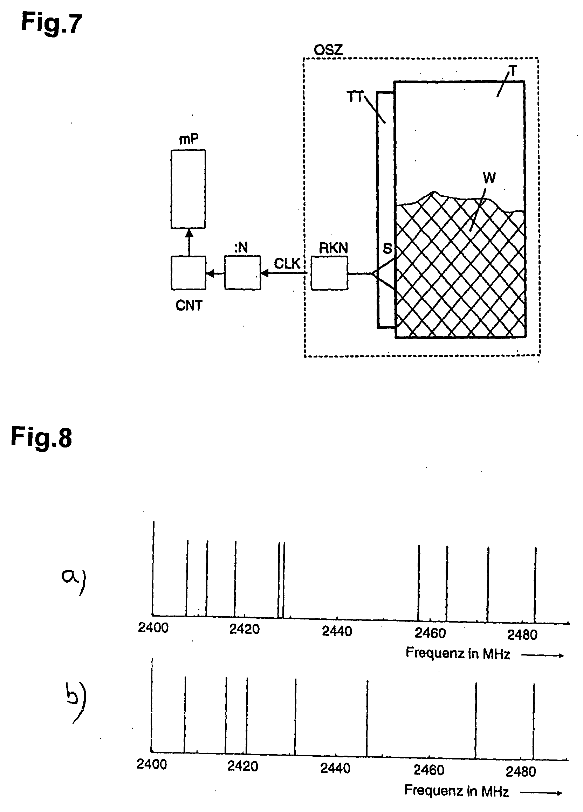

Figur 7 zeigt eine einfache Anordnung von Sonde, Meßschaltung und Auswerteeinrichtung. Auch hier wird eine Sonde S an der Wäschetrommel T so angeordnet, daß sie ein elektromagnetisches Feld in den Innenraum einkoppeln kann. Die Sonde ist so ausgestaltet, daß sie zusammen mit einem Rückkoppelnetzwerk RKN und der gegebenenfalls mit Wäsche W gefüllten Wäschetrommel T einen (zylindrischen) Hohlraumresonator OSZ ausbildet.

Das vom Hohlraumresonator erzeugte Oszillator-Taktsignal CLK wird in der einfachen Schaltung mit einem Teiler :N auf eine einfach auswertbare Frequenz herunter geteilt und diese Frequenz dann mit einem Zähler CNT zeitabhängig bestimmt. Als weiterer Parameter kann in dieser Schaltungsanordnung die Güte des Hohlraumresonators OSZ bestimmt werden. Dazu wird zu einem bestimmten Zeitpunkt t₀ die Leistungszufuhr zum Resonator gestoppt. Anschließend wird gemessen, wie lange nach t₀ der Schwingkreis noch nachschwingt. Die Anzahl der Nachschwingzyklen ist ein direktes Maß für die Güte des Oszillators. Als Auswerteeinrichtung ist auch hier wieder ein Mikroprozessor mP vorgesehen.

Neben der in Figur 7 dargestellten Reflektor-Oszillator-Schaltung könnte der Oszillator OSZ auch als Transmissionsoszillator ausgelegt werden. Hierzu wird neben der zur Einkopplung des Feldes vorgesehenen Sonde S eine weitere Auskopplungssonde vorgesehen. Generell ist es möglich, die Oszillatorschaltung auf allen bekannten HF-Oszillatorprinzipien aufzubauen. Entscheidend ist lediglich, daß die mit der Wäschefüllung W versehene Wäschetrommel T das frequenzbestimmende Element des Oszillators ist. Die Sonde S ist dabei so dimensioniert, daß sie im Bereich der möglichen Oszillatorfrequenzen keine eigene Resonanz bzw. keine Resonanzstellen aufweist, die von der Sonde S allein verursacht werden.

Zur Auswertung der Oszillatorschaltung ist es vorteilhaft, nicht nur eine sondern mehrere Resonanzmoden auszuwerten. Hierdurch können Einflußgrößen wie Beladungsdichte, Wäscheart usw. vom eigentlich zu untersuchenden Parameter besser abgetrennt werden. Bei unterschiedlichen Meßfrequenzen wirken die genannten Einflußfaktoren unterschiedlich auf die Meßgrößen ein, wobei sich neue, nicht redundante Meßinformationen ergeben. Diese erhöhen den Bestimmungsgrad des Gleichungssystems, welches die Abhängigkeit der Meßwerte von den unterschiedlichen Parametern des Trocknungsvorgangs angibt. Durch die Auswertung der für eine einfache Feuchtemessung teilweise redundanten Größen Resonanzfrequenz, Resonanzgüte und Resonanzamplitude kann ebenfalls eine verbesserte Trennung der Einflußgrößen bewirkt werden. Für die detektierten Meßgrößen Resonanzfrequenz, Resonanzgüte und Schwingungsamplitude ergeben sich Abhängigkeit von den Parametern wie Füllgrad der Trommel, Befülldichte der Wäsche W in der Trommel T, Temperatur der Wäsche, Wäscheart und Wäschefeuchte. Für jede Schwingungsmode ergibt sich dabei ein Gleichungssystem, das die untersuchte Meßgröße in Abhängigkeit der genannten Parameter darstellt. In der Auswerteeinheit kann die Aufgabe der Meßwertauswertung im wesentlichen darin bestehen, das Gleichungssystem zu lösen und die Parameter des Trocknungsprozesses zu separieren. Je mehr nichtredundante Meßgrößen zur Verfügung stehen, desto höher ist der Bestimmungsgrad des Gleichungssystems. In vorteilhafter Weise werden mit der Meßanordnung mindestens so viele Meßgrößen aufgenommen, daß das Gleichungssystem für einen oder mehrere der interessierenden Parameter zu lösen ist.

Eine weitere Möglichkeit der Auswertung besteht darin, einzelne Parameter mit davon unabhängigen zusätzlichen Sensoren zu bestimmen oder von vornherein Informationen in die Auswertung einzubringen. Dazu kann beispielsweise die Temperatur mit einem externen Temperatursensor, der Befüllungsgrad mit einem Abstandssensor, die Masse durch Auswiegen der Befüllung oder durch Auswerten des für die Bewegung der Trommel erforderlichen Motorstroms erfaßt werden. Die Kenntnis der Wäscheart kann als Vorgabe durch den Benutzer in die Auswertung mit eingehen. Ebenso bereits vorhandene Erkenntnisse über die Kopplung bestimmter Größen, beispielsweise die Kopplung der Größen Wäschedichte, Füllmenge, Wäscheart und Wäschefeuchte basierend auf Masse und Elastizitätsparametern.

Ein möglicher Ansatz zur Lösung der Gleichungen besteht darin, an sich bekannte und auf physikalischen Grundgleichungen beruhende analytische Funktionen wie beispielsweise die bekannten Feld- und Wellengleichungen von Hohlraumresonatoren zu bestimmen, die die Zusammenhänge der Meßgrößen mit den interessierenden Parametern beschreiben. Mit Hilfe zusätzlicher, wie eben beschrieben extern zu gewinnender, bekannter Parameter ist mit diesem analytischen Ansatz eine Lösung der Gleichungen möglich.

Aufgrund der komplexen theoretischen Zusammenhänge und der sich in der Praxis ergebenden Wechselwirkungen ist es jedoch erfindungsgemäß vorteilhafter, die Meßdaten einem Klassifikator zuzuführen, der die bestimmten Meßgrößen den gewünschten Parametern des Trockungsprozesses zuordnet. Von den bekannten und prinzipiell geeigneten Klassifikationsverfahren wie numerische Klassifikationsverfahren, Fuzzy-Klassifikationsverfahren ist insbesondere das Klassifikationsverfahren mit Hilfe neuronaler Netze geeignet oder ein trainierbares Klassifikationsverfahren. Ein Vorteil neuronaler Netze besteht darin, daß sie für die beschriebenen Meßanordnungen relativ einfach zu applizieren sind und anhand von Beispielen trainiert werden können. Über diese Trainierbarkeit wird das damit verbundene Wissen assoziativ gespeichert, so daß die teilweise sehr komplexen Zusammenhänge zwischen Meßgrößen und Parametern des Trockungsprozesses abgebildet werden können, ohne daß die genauen Zusammenhänge und Abhängigkeiten im einzelnen bekannt sein müssen. In diesem Fall muß auch kein analytisches Gleichungssystem zur Auswertung aufgelöst werden, die Auswertung wird durch Training verbessert und optimiert.

Zur Methodik der Auswertung sind prinzipiell zwei Verfahren zu unterscheiden. Eine Möglichkeit besteht darin, mindestens eine Resonanzmode kontinuierlich über den gesamten Trocknungsprozess zu verfolgen. Dabei ist es von Vorteil, eine Resonanzmode auszuwählen, die dominant ist und bezüglich ihrer Frequenz über das gesamte Verfahren bzw. über den gesamten Trockenzyklus ausreichend von benachbarten Moden entfernt ist. Hierdurch wird verhindert, daß eine Kopplung zwischen den Moden stattfindet.

Zur Separation benachbarter Moden kann die Anregungssonde so ausgelegt sein, daß sie vorzugsweise nur die gewünschte Mode anregt. Dies kann dadurch erreicht werden, daß die Feldlinienverteilung der Sonde eine größtmögliche Überdeckung mit den Feldlinien der gewünschten Hohlraumresonatormode aufweist, d. h. daß beide Feldlinien möglichst über den gesamten Resonatorhohlraum parallel verlaufen. Mit der Feldlinienverteilung unerwünschter Resonatormoden sollte dagegen keine oder nur wenig Deckung bestehen. Generell ist es dabei von Vorteil, Moden geringerer Ordnung zu verwenden.

Eine zweite prinzipielle Meßmöglichkeit besteht darin, die Schwingungsmoden nicht einzeln bzw. separiert auszuwerten, sondern das gesamte Resonanzspektrum bzw. einen Teil des Resonanzspektrums zu untersuchen. Für diese Art der Auswertung kann die Ausprägung des Resonanzspektrums wie ein Fingerabdruck für einen bestimmten Trocknungszustand angesehen werden. Je nach Feuchtigkeitsgrad, Wäscheart, Wäschemenge usw. werden unterschiedliche Moden angeregt, koppeln sich Moden oder werden deren Schwingeigenschaften durch die dielektrischen Eigenschaften beeinflußt. Für dieses Auswerteverfahren ist es von Vorteil, den Frequenzbereich zu untersuchen, in dem Schwingungsmoden höherer Ordnung angesiedelt sind. In diesem Fall wird eine hohe Signifikanz der Messung gewährleistet, da in diesem Frequenzbereich eine Vielzahl dicht benachbarter Moden besteht, in der schon kleine Änderungen der Parameter des Trocknungsprozesses deutliche Änderungen im Resonanzspektrum nach sich ziehen. Speziell für dieses Verfahren ist eine analytische Auswertung nicht mehr möglich. Vielmehr bieten sich hier die genannten Klassifikationsverfahren zur Auswertung an. Die zu lösende Aufgabe ähnelt dabei den Problemen, die bei Fingerabdruck-, Sprach- oder Bilderkennung bestehen, so daß auch die dafür bekannten Verfahren entsprechend angepaßt eingesetzt werden können.

In Abbildung 8 sind zur Erläuterung zwei Resonanzspektren dargestellt, die im Beispiel mit einer Anordnung gemäß Figur 1 aufgenommen sind, generell oder aber auch mit einem üblichen Netzwerkanalysator aufgenommen werden können. Die dargestellten Resonanzspektren sind bei einer Wäschetrommelfüllung mit unterschiedlichen Trocknungszuständen aufgenommen.

Die großen Unterschiede zwischen den beiden Spektren der Figuren 8a und 8b zeigen den großen Einfluß der zu bestimmenden Trocknungsparameter (Feuchtigkeitsgehalt der Wäsche) auf die hier zu untersuchenden Meßgrößen, nämlich auf die Lage der Resonanzfrequenzen unterschiedlicher Schwingungsmoden.

Naturgemäß konnte das erfindungsgemäße Verfahren nur anhand einiger besonders vorteilhafter Ausführungsbeispiele exemplarisch beschrieben werden. Die Erfindung ist jedoch nicht auf diese Ausführungsbeispiele beschränkt und läßt sich prinzipiell auch mit anderen auf dem dargestellten Meßprinzip basierenden Einrichtungen und Meß- und Auswerteverfahren durchführen.

## Patentansprüche

1. Wäschepflegeeinrichtung mit
einem geschlossenen, eine Wäschetrommel (T) enthaltenden Innenraum
einer Einrichtung zum Entzug von Feuchtigkeit aus der Wäsche (W) und
einem Sensor zur Erkennung des Feuchtegehalts der Wäsche, **dadurch gekennzeichnet,**
**daß** der Sensor umfaßt
eine Sonde (S) zur Einkopplung eines elektromagnetischen Feldes in den als Hohlraumresonator genutzten Innenraum, eine Meßschaltung (DET,FLT,A/D; :N,CNT), die die Schwingungsmoden des durch Sonde und Wäschetrommel gebildeten Hohlraumresonators erfassen kann, und
eine Auswerteeinrichtung (mP), die die erfassten Schwingungsmoden einem zu bestimmenden Feuchtegehalt in der Wäschetrommel zuordnen kann.

2. Einrichtung nach Anspruch 1,
bei der Meßschaltung (DET,FLT,A/D; :N,CNT) zur Bestimmung der Resonanzfrequenz und/oder der Güte des Hohlraumresonators ausgebildet ist.

3. Einrichtung nach Anspruch 1 oder 2,
bei der die Sonde (S) über eine Sende/Empfangsweiche (SEW) mit einem abstimmbaren Mikrowellen-Generator (TOSZ) und einem Detektor (DET) zur frequenzabhängigen Messung der an der Sonde reflektierten Schwingung verbunden ist.

4. Einrichtung nach Anspruch 1 oder 2,
bei der die Sonde (S) und ein Rückkoppelnetzwerk (RKN) miteinander verbunden sind, zusammen mit dem Hohlraumresonator einen Oszillator bilden, und bei der die Meßschaltung (DET,FLT,A/D; :N,CNT) zur Bestimmung der Resonanzfrequenz des Oszillators (OSZ) ausgebildet ist.

5. Einrichtung nach Anspruch 3,
bei der ein Mischer vorgesehen ist, der das an der Sonde (S) eingekoppelte Signal mit dem am Detektor (DET) reflektierten Signal frequenzmischt und bei dem Meßschaltung und Auswerteeinheit (mP) zur Bestimmung der Phasenbeziehung aus dem Mischsignal ausgelegt sind.

6. Einrichtung nach Anspruch 4,
bei der die Meßschaltung (DET,FLT,A/D; :N,CNT) einen Frequenzteiler (:N) für ein Taktsignal (CLK) des Oszillators (OSZ) und einen Zähler (CNT) die Impulse des Frequenzteiler umfaßt.

7. Verfahren zur Bestimmung des Feuchtegehalts von Wäsche (W) in einer Wäschepflegeeinrichtung,
- bei dem die Wäsche in einer Wäschetrommel (T) vorgelegt wird
- bei dem mit einem Mikrowellengenerator (TOSZ) über eine Sonde (S) ein elektromagnetisches Feld völlig oder weitgehend strahlungsfrei in die Wäschetrommel eingekoppelt wird, wobei diese als Hohlraumresonator genutzt wird,
- bei dem zumindest ein Parameter einer sich einstellenden Schwingungsmode bestimmt und
- bei dem der bestimmte Parameter des Hohlraumresonator einem Feuchtegehalt in der Wäsche zugeordnet wird.

8. Verfahren nach Anspruch 7,
- bei dem die Frequenz des angelegten Feldes über einen gegebenen Frequenzbereich variiert wird,
- bei dem die Reflexion an der Sonde (S) mit einer Reflektorschaltung in Abhängigkeit von der Frequenz detektiert wird
- bei dem aus der Reflexion Schwingungsparameter einer resonanten Mode des bestimmt und
- in einer Auswerteeinheit (mP) einem Feuchtegehalt zugeordnet wird.

9. Verfahren nach Anspruch 7,
bei dem die Sonde (S) mit einem Rückkoppelnetzwerk (RKN) zusammen einen Oszillator (OSZ) bildet, und bei dem die Resonanzfrequenz, die Güte des Oszillators einem Feuchtegehalt zugeordnet wird.

10. Verfahren nach Anspruch 7 oder 8,
bei dem der Mikrowellengenerator (TOSZ) während der Messung ausgehend von einer Ausgangs- oder Mittenfrequenz um 100 MHz bis 200 MHz variiert wird.

11. Verfahren nach Anspruch 7 bis 10,
bei dem aus der an der Sonde (S) reflektierten Leistung in einem Detektor (DET) ein Detektorsignal erzeugt wird,
bei dem das Detektorsignal in einem als Low Passfilter ausgebildeten Frequenzfilter (FLT) von höherfrequenten O-berschwingungen getrennt wird und über einen A/D Wandler (A/D) der Auswerteeinheit (mP) zugeführt wird.

12. Verfahren nach einem der Ansprüche 7 bis 11,
bei dem die Parameter mehrerer Schwingungsmoden bestimmt werden.

13. Verfahren nach einem der Ansprüche 7 bis 12,
der Meßwert aus dem Detektor (DET) mit einem Klassifikationsverfahren dem Feuchtegehalt zugeordnet wird, wobei ein numerischisches Klassifikationsverfahren oder ein Fuzzyverfahren angewendet, ein trainierbares Klassifikationsverfahren oder ein neuronales Netz verwendet wird.
